# EUROPÄISCHE PATENTSCHRIFT

(11) **EP 3 271 581 B1**
(45) Veröffentlichungstag und Bekanntmachung des Hinweises auf die Patenterteilung: **10.05.2023**
(21) Anmeldenummer: 16709939.9
(22) Anmeldetag: 15.03.2016
(51) Int. Cl.: F04B 35/01, F04B 35/04, F04B 39/12, F04B 45/04, F04B 39/00, F04B 45/047

(54) **MOTORPUMPENAGGREGAT MIT EINER EINZELNEN ELASTISCHEN MEMBRAN**
MOTOR/PUMP UNIT HAVING A SINGLE ELASTIC DIAPHRAGM
UNITÉ DE POMPE À MOTEUR POURVUE D'UNE SEULE MEMBRANE ÉLASTIQUE

(30) Priorität: 20.03.2015 DE 102015205059
(43) Veröffentlichungstag der Anmeldung: 24.01.2018
(73) Patentinhaber: Continental Automotive Technologies GmbH, 30165 Hannover (DE)
(72) Erfinder: KREBS, Stephan, 65760 Eschborn (DE); JÜRGING, Michael, 65779 Kelkheim (DE); RÜFFER, Manfred, 65843 Sulzbach (DE); KREH, Heinrich, 61197 Florstadt (DE); BACHER, Jens, 60439 Frankfurt am Main (DE); TOQUERO, Ricardo, 78290 San Luis Potosi (MX); GONZALEZ, Jose, 32549 Bad Oeynhausen (DE); NIEPENBERG, Marcel, 37276 Meinhard-Hitzelrode (DE); MILISIC, Lazar, 65779 Kelkheim/Taunus (DE); PETZOLD, Falk, 60489 Frankfurt/M (DE); KOPPEL, Hans-Michael, 65931 Frankfurt (DE); WIEBE, Paul, 64331 Weiterstadt (DE); BREITKOPF, Martina, 65760 Eschborn (DE); OEFFNER, Thomas, 61184 Karben (DE); MESSNER, Adrian, 64285 Darmstadt (DE); MEYER, Ulrike, 60325 Frankfurt (DE); IMHOF, Stefan, 61440 Oberursel (DE); FELLINGER, Rolf, P. Rayong 21190 (TH)
(74) Vertreter: Continental Corporation
(86) Internationale Anmeldenummer: PCT/EP2016/055556
(87) Internationale Veröffentlichungsnummer: WO 2016/150763

(56) Entgegenhaltungen:
- WO-A1-2007/134928
- DE-A1- 4 118 652
- DE-A1-102013 201 718
- JP-A- 2002 371 968
- US-A- 4 743 169

## Beschreibung

Die Erfindung betrifft ein Motorpumpenaggregat, insbesondere zur Unterdruckversorgung eines pneumatischen Bremskraftverstärkers für eine hydraulische PKW-Bremsanlage. Die modernen Fahrzeugantriebe stellen meist zu wenig bis gar keinen Unterdruck zur Verfügung, um einen pneumatischen Bremskraftverstärkern betreiben zu können. Dies macht den Einsatz von gesonderten Pumpenaggregaten zur Erzeugung vom erforderlichen Unterdruck erforderlich.

Als besonders flexibel im Einsatz erweisen sich dabei Motorpumpenaggregate mit einer eigenen Antriebseinheit, da sie unabhängig vom Hauptantrieb bedarfsgemäß betrieben werden können. Besonders verbreitet sind dabei Flügelzellenpumpen und Doppelmembranpumpen mit zwei gegenüberliegenden elastomeren Membranen in Boxeranordnung, wie beispielsweise aus WO 2007/134928 A1 bekannt. Die Doppelmembranpumpen haben gegenüber den Flügelzellenpumpen insbesondere Vorteile, dass sie auch bei hohen Temperaturen und in großen Höhen beim niedrigen Luftdruck zuverlässig funktionieren, außerdem eine steile Luftdurchsatz-Anlaufcharakteristik aufweisen. Allerdings sind sie auch meist schwerer, größer, komplexer aufgebaut und somit teurer als die Flügelzellenpumpen. Zudem benötigen derartige Konstruktionen oft komplexe Vorrichtungen zum Schutz vom Wassereindrang in den Innenraum, um Schäden am Motorpumpenaggregat und dem Bremskraftverstärker zu vermeiden.

Aus US 4,743,169 A ist eine besonders einfach ansteuerbare Einkolben-Diafragmen-Vakuumpumpe mit einem federgesteuerten Ventil zur Einhaltung eines vorbestimmten Unterdruckniveaus im Verbraucher bekannt. Beim Erreichen eines bestimmten Unterdrucks im Verbraucher öffnet das Ventil und lässt Luft aus der Atmosphäre in eine Arbeitskammer hinein, wodurch die Pumpe in einen Quasi-Leerlauf schaltet. Eine derartige Pumpe ist jedoch ineffizient hinsichtlich ihren Energieverbrauchs und zudem vergleichsweise laut, da sie über keinerlei Schalldämpfungsmaßnahmen verfügt.

Es stellt sich daher die Aufgabe, ein Motorpumpenaggregat anzubieten, welches unter Einhaltung der Vorteile von Doppelmembranpumpen einfacher, kompakter und preiswerter ist.

Die Aufgabe wird erfindungsgemäß durch die Merkmalskombination nach dem unabhängigen Anspruch 1 gelöst. Unteransprüche geben weitere erfindungsgemäße Ausführungen und Weiterbildungen an.

Der erfindungsgemäße Aufbau eines hochintegrierten Aggregats mit einer einzigen Membran ermöglicht die Verwendung eines kleineren und leichteren Elektroantriebes, die Verringerung von Einzelteilen von einer erheblichen Reduzierung von Kosten, Gewicht und Montageaufwand. Kompaktere Außenabmessungen erlauben ein noch Packaging im Motorraum eines Kraftfahrzeugs.

Ein pneumatischer Anschluss zum Verbinden des Arbeitsraumes des Motorpumpenaggregats mit dem Verbraucher wie beispielsweise Bremskraftverstärker kann besonders vorteilhaft direkt am Arbeitsraumdeckel in unmittelbarer Nähe zum Einlassventil angeordnet und insbesondere angeformt werden. Auf zusätzliche, den Wirkungsgrad mindernde Luftkanäle wird verzichtet, der Aufbau vom Pumpengehäuse erheblich vereinfacht. Zudem kann der pneumatische Anschluss in je nach vorliegenden Raumanforderungen flexibel angepasst werden, sowohl die Richtung und Position betreffend, als auch den Typ - beispielsweise als ein Stutzen, ein Bajonettverschluss, ein Schnellverschluss bzw. ein Quick Connector.

Eine direkt an dem Arbeitsraumdeckel unmittelbar nach dem Auslassventil angeordnete und vorzugsweise integriert angeformte Schalldämpfereinheit mit einem porösen Filterelement ermöglicht eine besonders effiziente Geräuschminderung mit wenig Druckverlust und einem hohen Wirkungsgrad.

In vorteilhafter Weiterbildung der Erfindung kann in der Schalldämpfereinheit zur Vermeidung von Wassereintritt ein Rückschlagventil vorgesehen sein, welches in Luftströmungsrichtung zwischen dem Filterelement und der Atmosphäre angeordnet und derart eingerichtet ist, dass es in Richtung Filterelement geschlossen ist. Dabei kann das Rückschlagventil kostengünstig aus einem elastomeren Werkstoff hergestellt und besonders einfach montierbar zwischen dem Filterelement und der Wand mit der Luftaustrittsöffnung in der Schalldämpfereinheit eingeklemmt sein.

Ein feuchtes Filterelement verursacht meist einen erheblich erhöhen Druckverlust. Durch den Einsatz eines Rückschlagventils könne für das Filterelement kostengünstige und besonders effektiv schalldämpfende Werkstoffe ohne Rücksicht auf deren Saugfähigkeit zurückgegriffen und auf wasserabweisende Beschichtungen verzichtet werden.

In einer besonders vorteilhaften Weiterbildung kann das Rückschlagventil als ein Lippenventil, insbesondere als ein Entenschnabelventil gestaltet sein. Eine derartige Ventilkonstruktion ist aerodynamischer und leiser als ein vergleichbares Flachventil, bietet eine wesentlich bessere Schutzwirkung vor dem Wassereindrang, ist gleichzeitig günstiger, leichter und hat einen geringeren Raumbedarf als mechanische federbelasteten Rückschlagventile mit einem Sperrkörper.

In einer weiteren vorteilhaften Weiterbildung kann, der aus dem Filterelement und gegebenenfalls dem Rückschlagventil austretender Luftstrom, in einen Kanal eingeleitet werden, in dem er zunächst umgelenkt und erst dann in die Umgebung geleitet wird. Dabei bildet der Kanal eine zusätzliche Schutzvorrichtung gegen Wassereindrang, Verschmutzung und mechanische Beschädigungen, indem er einer Art Schwallwand vor der Luftaustrittsöffnung bildet, zusätzlich wird durch die Umlenkung des Luftstroms die Schalldämpfungswirkung weiter erhöht.

Dabei kann der Kanal über nur eine, aber auch zwei und mehr Austrittsöffnungen verfügen, die in verschiedenen Winkeln zueinander angeordnet werden können. Dadurch kann beispielsweise eine vom Spritzwasser besonders geschützte Richtung für die Austrittsöffnung gezielt gewählt werden.

In weiteren Weiterbildungen kann der elektrische Anschlussstecker zur Versorgung der Motoreinheit direkt an der Motoreinheit oder im Pumpengehäuse integriert vorgesehen werden. Besonders vorteilhaft erweist sich die Integration des Anschlusssteckers am Pumpengehäuse bei gleichzeitiger Auslegung der elektrischen Kontaktierung zur Motoreinheit derart, dass diese beim Zusammenfügen des Pumpengehäuses und der Motoreinheit während der Montage des Motorpumpenaggregats selbsttätig und zwangsweise zustande kommt - beispielsweise mittels an definierten Positionen in den beiden Komponenten angeordneten korrespondierenden Steck- oder Federkontakten. Hierdurch wird die Montage erheblich vereinfacht, Prozessschritte reduziert und Montagefehler - beispielsweise aufgrund vergessener Kontaktierung oder beschädigter Kabel - vermieden.

Weitere Einzelheiten, Merkmale, Vorteile und Anwendungsmöglichkeiten der Erfindung gehen aus Unteransprüchen zusammen mit der Beschreibung und anhand der Figuren hervor. Übereinstimmende Komponenten und Konstruktionselemente werden nach Möglichkeit mit gleichen Bezugszeichen versehen.

Auf detaillierte Beschreibung von Grundfunktionen eines gattungsgemäßen Motorpumpenaggregats wird dabei weitgehend verzichtet, da ausreichend bekannt.

Nachstehend zeigt:
Fig. 1 eine bekannte Ausführung eines Doppelmembranpumpe.
Fig.2 eine erste erfindungsgemäße Ausführungsform des Motorpumpenaggregats mit Teilausschnitt.
Fig.3 Eine vergrößerte Ansicht der Schaldämpfereinheit der Ausführung nach Fig.2.
Fig.4 Eine räumliche Ansicht eines erfindungsgemäßen Motorpumpenaggregats.
Fig.5 Eine räumliche Ansicht einer anderen erfindungsgemäßen Ausführungsform eines Motorpumpenaggregats und die Vergrößerte Darstellung des zugehörigen Anschlusssteckers.

### Fig.1:

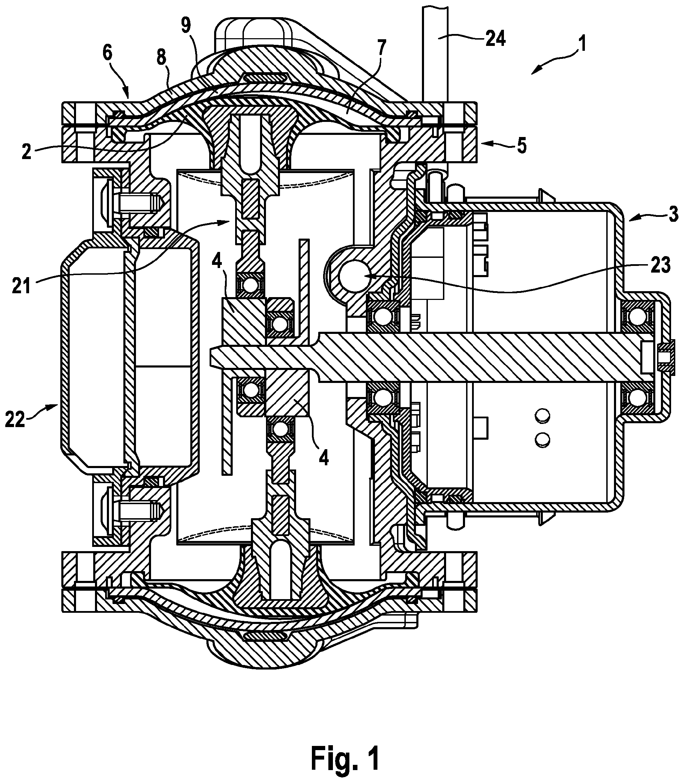

Fig. 1 zeigt eine bekannte Ausführung eines als eine Doppelmembranpumpe aufgebauten Motorpumpenaggregats. Eine Motoreinheit 3 treibt über einen Exzentertrieb 4 zwei Pleuel 21 an, welche die Bewegung an zwei gegenüberliegend angeordneten Membranen 2 übermitteln. Das Pumpengehäuse 5 wird von beiden Seiten durch jeweils einen Arbeitsraumdeckel 6 verschlossen. Zwischen jedem Arbeitsraumdeckel 6 und dem Pumpengehäuse 5 ist je eine elastomere Membran 2 luftdicht eingespannt, so dass jeweils zwischen der Membran 2und dem Arbeitsraumdeckel 6 ein Arbeitsraum 7 mit einem veränderbaren Volumen ausgebildet ist. Jeder Arbeitsraumdeckel 6 ist mehrteilig mit einem Oberdeckel 8 und einem Unterdeckel 9 sowie zwischen dem Oberdeckel 8 und dem Unterdeckel 9 angeordneten, nicht gezeigten Einlass- 10 und Auslassventilen 11, welche die Luftzirkulation durch den Arbeitsraum 7 steuern, ausgebildet. Die Luft zu den Einlassventilen wird von einem zentralen, am Pumpengehäuse 5 angeordneten Luftanschluss 23 über nicht gezeigte, im Pumpengehäuse 5 integrierte Luftkanäle zugeleitet. Die Luft von den Auslassventilen wird über weitere Kanäle in den Innenraum von dem Pumpengehäuse 5 und von dort durch die am Pumpengehäuse 5 angeordnete Luftauslasseinheit 22 in die Atmosphäre geleitet. Über eine aus der Motoreinheit 3 herausgeführte Kabelleitung 24 wird der elektrische Antrieb mit Strom versorgt und gesteuert.

### Fig.2:

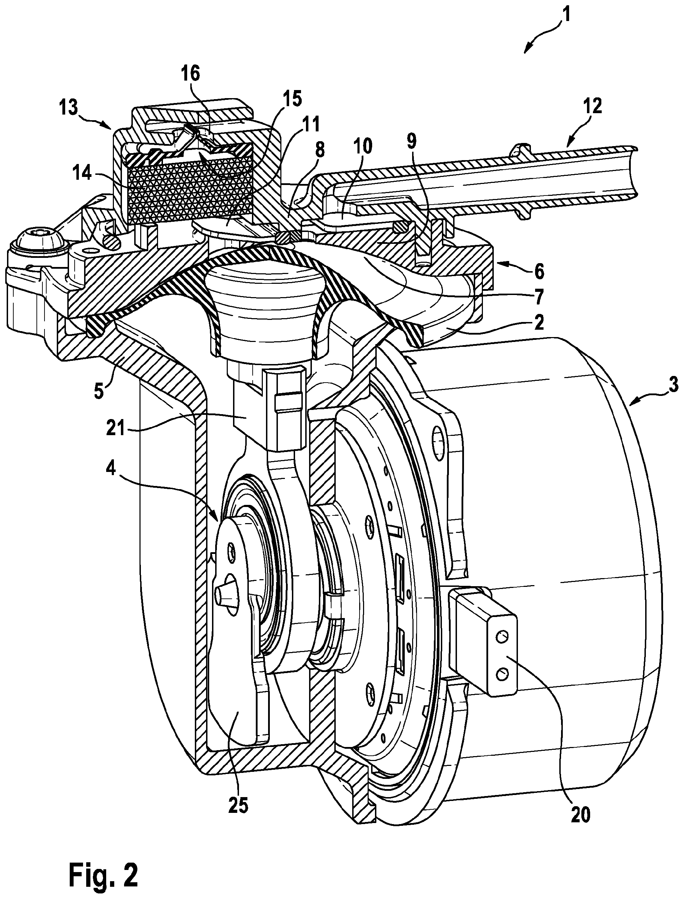

Die Fig.2 zeigt eine erste erfindungsgemäße Ausführungsform des Motorpumpenaggregates 1. Das Motorpumpenaggregat 1 verfügt im Unterschied zu der bekannten Ausführung nach Fig.1 über lediglich eine einzige Membran 2. Diese wird von einem einzigen Pleuel 21 in Bewegung versetzt, der von der elektrischen Motoreinheit 3 über den Exzentertrieb 4 mit einem einzigen Exzenter angetrieben ist. Ein am Exzenter angeformtes Ausgleichsgewicht 25 dient dem Massenausgleich zum Pleuel 21 und sorgt so für Reduzierung von Vibrationen im Betrieb.

Das Pumpengehäuse 5 ist an einer Seite mit der Motoreinheit 3 zusammengefügt und verschraubt, an einer anderen, im Bild oberen Seite von einem Arbeitsraumdeckel 6 verschlossen. Zwischen dem Arbeitsraumdeckel 6 und dem Pumpengehäuse 5 ist die Membran 2 an ihrem radial äußeren Rand dichtend eingespannt. Dabei wird eine Wulst am Membranenrand in eine umlaufende kreisförmige Nut im Pumpengehäuse 5 eingepresst.

Der Arbeitsraumdeckel 6 ist mehrteilig ausgebildet und weist einen Oberdeckel 8 und einen Unterdeckel 9 auf. Zwischen dem Oberdeckel 8 und dem Unterdeckel 9 ist ein Einlassventil 10 und ein Auslassventil 11 angeordnet, die beiden als elastische Plättchenventile gestaltet.

An dem Oberdeckel 8 sind ein pneumatischer Anschluss 12 zum anschließen beispielsweise eines Bremskraftverstärkers, sowie eine Schalldämpfereinheit 13 angeordnet. In der gezeigten Ausführung sind die dafür erforderlichen räumlichen Gebilde als integrative Bestandteile des Oberdeckels 8 gestaltet.

### Fig.3:

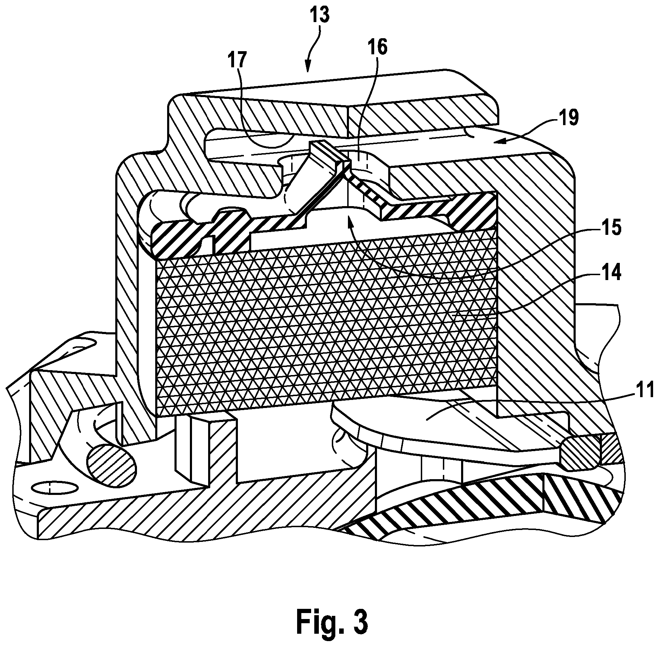

Die Fig.3 bildet die Schalldämpfereinheit aus der Fig.2 vergrößert ab. Die Schalldämpfereinheit 13 erfüllt im Wesentlichen zwei Funktionen. Erstens dient sie zur Schallreduzierung im aus der Arbeitskammer 7 austretenden Luftstrom. Zu diesem Zweck verfügt sie über sie ein Filterelement 14 aus einem porösen Werkstoff, wobei das Filterelement 14 weitgehend den gesamten Innenraum der Schalldämpfereinheit 13 einnimmt.

Zweitens verhindert die Schalldämpfereinheit 13 den Wassereindrang aus der Umgebung des Motorpumpenaggregats 1. Zu diesem Zweck ist in der Schalldämpfereinheit 13 ein Rückschlagventil 15 vorgesehen, der als eine richtungsabhängige Sperre zwischen dem Filterelement 14 und der Umgebung - der Atmosphäre - angeordnet ist. Zum Austreten der Luft weist das Schalldämpferelement 13 in einer Wand eine Luftaustrittsöffnung 16 auf, dabei ist das Rückschlagventil 15 zwischen dem Filterelement 14 und der Wand mit der Luftaustrittsöffnung 16 eingeklemmt. Das Rückschlagventil ist aus einem elastomeren Werkstoff ausgebildet und verfügt über ein Lippenventil, welches als ein sogenanntes Entenschnabelventil geformt ist. Beim Austreten der Luft aus der Arbeitskammer 7 während eines Hubes der Membran 2, öffnen die Lippen des Ventils sich elastisch vorspannend aufgrund des filterseitig höheren Luftdruckes und schließen sich durch die aufgebaute Vorspannung, sobald der Luftdruck auf beiden Seiten des Ventils wieder ausgeglichen ist.

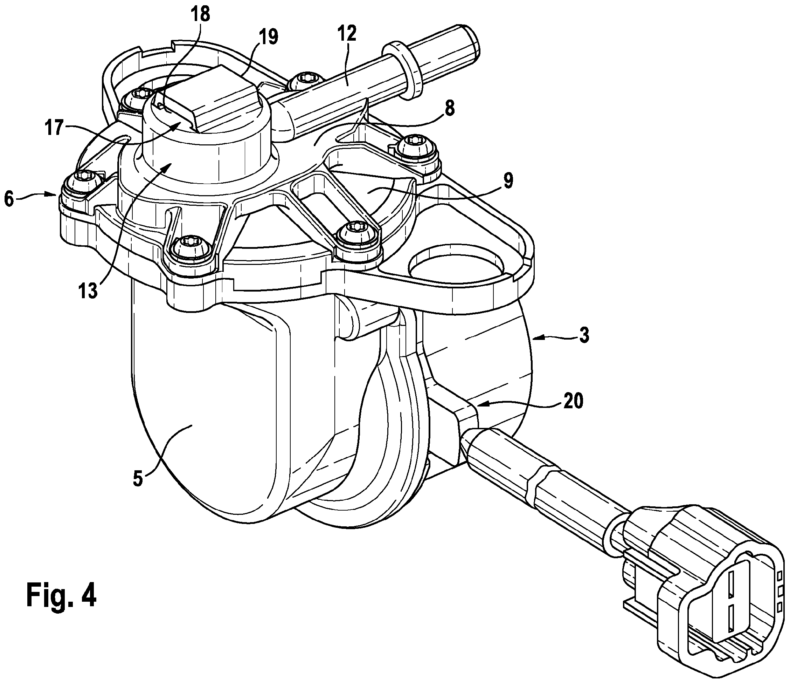

Die aus der Luftaustrittsöffnung 16 der Schalldämpfereinheit 13 austretende Luft tritt in einen Kanal 17, wo sie umgelenkt wird und durch zwei gegenüberliegende Austrittsöffnungen 18,19 (siehe Fig.4) schließlich aus dem Motorpumpenaggregat 1 in die Umgebung austritt. Der Kanal 17 verbessert sowohl die Schallreduzierung zusätzlich Umlenkung des Luftstroms, als aus den Wasserschutz, indem er als Schwallwand vor der Luftaustrittsöffnung 16 dient.

In der abgebildeten Ausführung weist der Kanal 17 einen abgeflachten, im Wesentlichen rechteckigen Querschnitt auf und ist durch eine Art an der Schalldämpfereinheit 13 angeformte beidseitig offene Haube gebildet. Innerhalb der Erfindung kann der Kanal 17 jedoch mit einem beliebigen Querschnitt und Verlauf gestaltet sein, nur eine oder mehr als zwei Austrittsöffnungen 18,19 aufweisen, welche zudem nicht ausschließlich gegenüber, sondern in einem von 180°abweichenden Winkel zueinander angeordnet sind.

### Fig.4:

In der Fig.4 ist die vorstehend beschriebene Ausführung des erfindungsgemäßen Motorpumpenaggregats 1 zur Verdeutlichung in einer räumlichen Darstellung abgebildet. Zu beachten ist der elektrische Anschlussstecker 20 zur Versorgung der Motoreinheit 3 mit Strom und gegebenenfalls Steuersignalen, der direkt an der Motoreinheit 3 angeordnet ist. Der Anschlussstecker 20 bildet eine Schnittstelle für das elektrische Bordnetz des Fahrzeugs.

### Fig.5:

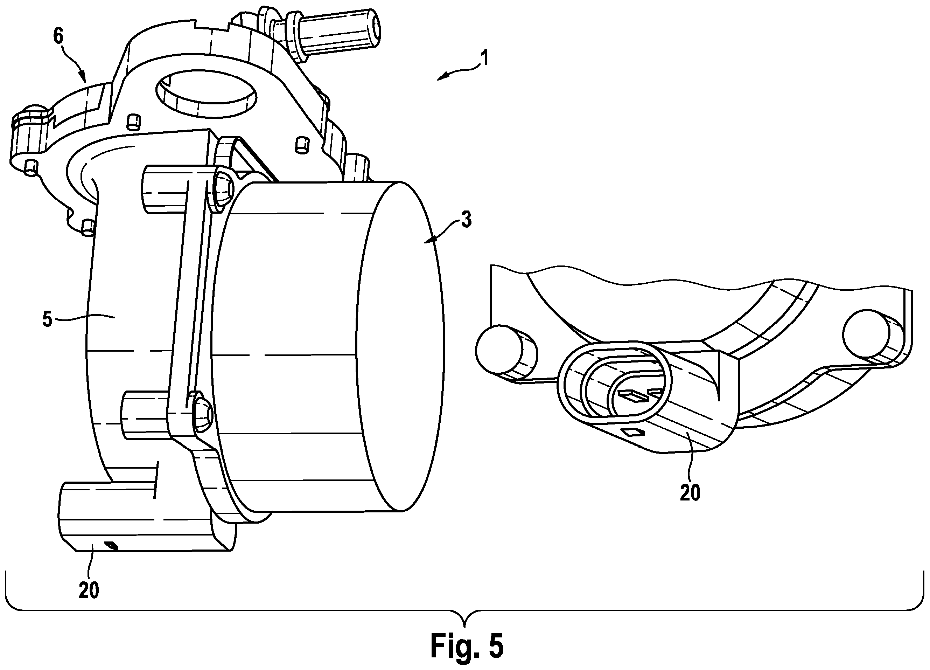

Bei der in der Fig.5 abgebildeten weiteren erfindungsgemäßen Ausführungsform ist der Anschlussstecker 20 in das Pumpengehäuse 5 integriert. Dabei kann die (nicht gezeigte) Kontaktierung zwischen dem Anschlussstecker 20 und der Motoreinheit 3 im Inneren des Pumpengehäuses 5 so gestaltet sein, das diese beim Zusammenfügen der Motoreinheit 3 mit dem Pumpengehäuse 5 während der Montage des Motorpumpenaggregats 1 selbsttätig und zwangsweise zustande kommt - beispielsweise mittels an definierten Positionen in den beiden Komponenten angeordneten korrespondierenden Steck- oder Federkontakten.

### Bezugszeichen:

- 1: Motorpumpenaggregat
- 2: Membran
- 3: Motoreinheit
- 4: Exzentertrieb
- 5: Pumpengehäuse
- 6: Arbeitsraumdeckel
- 7: Arbeitsraum
- 8: Oberdeckel
- 9: Unterdeckel
- 10: Einlassventil
- 11: Auslassventil
- 12: Anschluss
- 13: Schalldämpfereinheit
- 14: Filterelement
- 15: Rückschlagventil
- 16: Luftaustrittsöffnung
- 17: Kanal
- 18: Ausgangsöffnung
- 19: Ausgangsöffnung
- 20: Anschlussstecker
- 21: Pleuel
- 22: Luftauslasseinheit
- 23: Luftanschluss
- 24: Elektrokabel
- 25: Ausgleichsgewicht

## Patentansprüche

1. Motorpumpenaggregat (1) zur Unterdruckversorgung insbesondere eines pneumatischen Bremskraftverstärkers, wobei:
- das Motorpumpenaggregat (1) als eine Membranpumpe mit einer einzigen elastomeren Membran (2) ausgebildet ist,
- die Membran (2) durch eine elektrisch betriebene Motoreinheit (3) mittels eines Exzentertriebes (4) bewegt ist,
- das Motorpumpenaggregat (1) ein Pumpengehäuse (5) und einen Arbeitsraumdeckel (6) aufweist und die Membran (2) am ihren radialen Außenrand zwischen dem Pumpengehäuse (5) und dem Arbeitsraumdeckel (6) dichtend eingeklemmt ist, so dass zwischen der Membran (2) und dem Arbeitsraumdeckel (6) ein Arbeitsraum (7) mit einen veränderbaren Volumen ausgebildet ist,
- der Arbeitsraumdeckel (6) mehrteilig mit einem Oberdeckel (8) und einem Unterdeckel (9) sowie zwischen dem Oberdeckel (8) und dem Unterdeckel (9) angeordneten Einlass-(10) und Auslassventil (11), welche die Luftzirkulation durch den Arbeitsraum (7) steuern ausgebildet ist **dadurch gekennzeichnet, dass** ein pneumatischer Anschluss (12) zum Einlassen der Luft in den Arbeitsraum (7) sowie eine Schalldämpfereinheit (13) zum geräuschmindernden Auslassen der Luft aus dem Arbeitsraum (7) in die Atmosphäre vorgesehen sind, wobei der Anschluss (12) und die Schalldämpfereinheit (13) am Arbeitsraumdeckel (6) angeordnet sind.

2. Motorpumpenaggregat (1) nach Anspruch 1 **dadurch gekennzeichnet, dass** der Anschluss (12) und die Schalldämpfereinheit (13) integral mit dem Arbeitsraumdeckel (6) verbunden sind.

3. Motorpumpenaggregat (1) nach Anspruch 1 oder 2 **dadurch gekennzeichnet, dass** die Schalldämpfereinheit (13) ein Filterelement (14) aus einem porösen Werkstoff und ein Rückschlagventil (15) aufweist, wobei das Rückschlagventil (15) in Luftströmungsrichtung zwischen dem Filterelement (14) und der Atmosphäre angeordnet ist.

4. Motorpumpenaggregat (1) nach Anspruch 3 **dadurch gekennzeichnet, dass** das Rückschlagventil (15) aus einem Elastomerwerkstoff als ein Lippenventil, insbesondere als Entenschnabelventil gestaltet ist.

5. Motorpumpenaggregat (1) nach Anspruch 3 **dadurch gekennzeichnet, dass** das Rückschlagventil (15) in der Schalldämpfereinheit (13) zwischen dem Filterelement (14) und einer Wand mit einer Luftaustrittsöffnung (16) eingeklemmt ist.

6. Motorpumpenaggregat (1) nach wenigstens einem der Ansprüche 3 bis 5 **dadurch gekennzeichnet, dass** ein Kanal (17) zum Umlenken eines aus dem Rückschlagventil (15) austretenden Luftstroms vorgesehen ist.

7. Motorpumpenaggregat (1) nach Anspruch 6 **dadurch gekennzeichnet, dass** der Kanal (17) zur Umlenkung des Luftstroms in wenigstens zwei verschiedene Richtungen ausgebildet ist, indem er unterschiedlich gerichtete Ausgangsöffnungen (18, 19) aufweist.

8. Motorpumpenaggregat (1) nach Anspruch 1 **dadurch gekennzeichnet, dass** ein elektrischer Anschlussstecker (20) zur Versorgung der Motoreinheit (3) im Pumpengehäuse (5) integriert vorgesehen ist.

9. Motorpumpenaggregat (1) nach Anspruch 8 **dadurch gekennzeichnet, dass** elektrische Kontaktierung zwischen dem Anschlussstecker (20) und der Motoreinheit (3) beim Zusammenfügen des Pumpengehäuses (5) und der Motoreinheit (3) zwangsweise selbststätig erzeugt ist.

10. Motorpumpenaggregat (1) nach Anspruch 1 **dadurch gekennzeichnet, dass** ein elektrischer Anschlussstecker (20) zur Versorgung der Motoreinheit (3) an der Motoreinheit (3) angeordnet ist.

## Claims

1. Motor/pump assembly (1) for supply of negative pressure in particular to a pneumatic brake booster, wherein:
- the motor/pump assembly (1) is in the form of a diagram pump with a single elastomer diaphragm (2),
- the diaphragm (2) is moved by an electrically operated motor unit (3) by means of an eccentric drive (4),
- the motor/pump assembly (1) has a pump housing (5) and a working-chamber cover (6), and the diaphragm (2) is clamped in a sealing manner at its radial outer edge between the pump housing (5) and the working-chamber cover (6) such that a working chamber (7) with a variable volume is formed between the diaphragm (2) and the working-chamber cover (6),
- the working-chamber cover (6) is of multi-part form with a top cover (8) and a bottom cover (9) and also an inlet valve (10) and an outlet valve (11) which are arranged between the top cover (8) and the bottom cover (9) and which control the circulation of air through the working chamber (7), **characterized in that** a pneumatic connection (12) for letting the air into the working chamber (7) and a sound-damping unit (13) for letting the air out of the working chamber (7) into the atmosphere in a noise-reducing manner are provided, wherein the connection (12) and the sound-damping unit (13) are arranged on the working-chamber cover (6).

2. Motor/pump assembly (1) according to Claim 1, **characterized in that** the connection (12) and the sound-damping unit (13) are connected integrally to the working-chamber cover (6).

3. Motor/pump assembly (1) according to Claim 1 or 2, **characterized in that** the sound-damping unit (13) has a filter element (14) composed of a porous material and has a check valve (15), wherein the check valve (15) is arranged between the filter element (14) and the atmosphere in the air-flow direction.

4. Motor/pump assembly (1) according to Claim 3, **characterized in that** the check valve (15) is designed as a lip valve, in particular as a duckbill valve, from an elastomer material.

5. Motor/pump assembly (1) according to Claim 3, **characterized in that** the check valve (15) is clamped in the sound-damping unit (13) between the filter element (14) and a wall with an air-discharge opening (16).

6. Motor/pump assembly (1) according to at least one of Claims 3 to 5, **characterized in that** a channel (17) for diverting a flow of air exiting the check valve (15) is provided.

7. Motor/pump assembly (1) according to Claim 6, **characterized in that** the channel (17) is configured for diverting the flow of air into at least two different directions by having differently directed exit openings (18, 19).

8. Motor/pump assembly (1) according to Claim 1, **characterized in that** an electrical connector plug (20) for providing a supply to the motor unit (3) is provided integrated in the pump housing (5).

9. Motor/pump assembly (1) according to Claim 8, **characterized in that** electrical contacting between the connector plug (20) and the motor unit (3) is necessarily produced automatically when the pump housing (5) and the motor unit (3) are joined together.

10. Motor/pump assembly (1) according to Claim 1, **characterized in that** an electrical connector plug (20) for providing a supply to the motor unit (3) is arranged on the motor unit (3).

## Revendications

1. Groupe de pompe à moteur (1) destiné à l'alimentation en dépression en particulier d'un servofrein pneumatique, dans lequel :
- le groupe de pompe à moteur (1) est réalisé comme une pompe à membrane avec une seule membrane élastomère (2),
- la membrane (2) est déplacée par une unité de moteur (3) à actionnement électrique au moyen d'un mécanisme à excentrique (4),
- le groupe de pompe à moteur (1) présente un carter de pompe (5) et un couvercle d'espace de travail (6), et la membrane (2) est serrée de manière étanche au niveau de son bord extérieur radial entre le carter de pompe (5) et le couvercle d'espace de travail (6) de sorte qu'un espace de travail (7) d'un volume variable est réalisé entre la membrane (2) et le couvercle d'espace de travail (6),
- le couvercle d'espace de travail (6) est réalisé en plusieurs parties avec un couvercle supérieur (8) et un couvercle inférieur (9) ainsi qu'une vanne d'entrée (10) et une vanne de sortie (11) disposées entre le couvercle supérieur (8) et le couvercle inférieur (9) qui commandent la circulation de l'air à travers l'espace de travail (7), **caractérisé en ce qu'**un raccord pneumatique (12) permettant de laisser entrer l'air dans l'espace de travail (7) ainsi qu'une unité d'amortissement de bruit (13) permettant de laisser sortir l'air de l'espace de travail (7) dans l'atmosphère en atténuant le bruit sont prévus, dans lequel le raccord (12) et l'unité d'amortissement de bruit (13) sont disposés sur le couvercle d'espace de travail (6).

2. Groupe de pompe à moteur (1) selon la revendication 1, **caractérisé en ce que** le raccord (12) et l'unité d'amortissement de bruit (13) sont reliés intégralement au couvercle d'espace de travail (6).

3. Groupe de pompe à moteur (1) selon la revendication 1 ou 2, **caractérisé en ce que** l'unité d'amortissement de bruit (13) présente un élément filtrant (14) en matériau poreux et un clapet antiretour (15), dans lequel le clapet antiretour (15) est disposé dans la direction de flux d'air entre l'élément filtrant (14) et l'atmosphère.

4. Groupe de pompe à moteur (1) selon la revendication 3, **caractérisé en ce que** le clapet antiretour (15) est formé à partir d'un matériau élastomère sous la forme d'un clapet à bec, en particulier sous la forme d'un clapet à bec de canard.

5. Groupe de pompe à moteur (1) selon la revendication 3, **caractérisé en ce que** le clapet antiretour (15) dans l'unité d'amortisseur de bruit (13) est serré entre l'élément filtrant (14) et une paroi pourvue d'une ouverture de sortie d'air (16).

6. Groupe de pompe à moteur (1) selon au moins l'une des revendications 3 à 5, **caractérisé en ce qu'**un canal (17) pour dévier un flux d'air sortant du clapet antiretour (15) est prévu.

7. Groupe de pompe à moteur (1) selon la revendication 6, **caractérisé en ce que** le canal (17) est réalisé pour dévier le flux d'air dans au moins deux directions différentes **en ce qu'**il présente des ouvertures de sortie (18, 19) orientées différemment.

8. Groupe de pompe à moteur (1) selon la revendication 1, **caractérisé en ce qu'**une fiche de raccordement électrique (20) pour l'alimentation de l'unité de moteur (3) est prévue de manière intégrée dans le carter de pompe (5).

9. Groupe de pompe à moteur (1) selon la revendication 8, **caractérisé en ce que** la mise en contact électrique entre la fiche de raccordement (20) et l'unité de moteur (3) est générée forcément de manière automatique lorsque le carter de pompe (5) et l'unité de moteur (3) sont assemblés.

10. Groupe de pompe à moteur (1) selon la revendication 1, **caractérisé en ce qu'**une fiche de raccordement électrique (20) pour l'alimentation de l'unité de moteur (3) est disposée sur l'unité de moteur (3).
